# EUROPEAN PATENT APPLICATION

(11) **EP 2 746 078 A1**
(43) Date of publication of application: **25.06.2014**
(21) Application number: 13198029.4
(22) Date of filing: 18.12.2013
(51) Int. Cl.: B60G 17/017

(54) **Trailer suspension system**

(30) Priority: 19.12.2012 GB 201222870
(71) Applicant: Haldex Brake Products Limited, Lindley, Warwickshire CV13 6DE (GB)
(72) Inventor: Harrison, Dudley, John, Solihull, West Midlands B90 4YP (GB); Prescott, Robert David, Solihull, West Midlands B91 1DG (GB)
(74) Representative: Lawson, Alison Christina

(57) **Abstract**

A control system for a trailer, the trailer comprising a trailer deck and a suspension system which is controllable to adjust the height of the trailer deck above the surface on which the trailer rests, the control system comprising: a processor which is operable to control the suspension system; and a determining arrangement to determine automatically the height of a surface of a loading bay in proximity to the trailer, either relative to the surface on which the trailer rests or relative to a part of the trailer, wherein the processor its operable to adjust the height of the trailer deck, in response to information from the determining arrangement, to match substantially that of the surface of the loading bay.

## Description

### Description of Invention

THIS INVENTION relates to a trailer suspension system, and in particular concerns a system for adjusting the ride height of a trailer.

Many trailers that have an air suspension system are fitted with a device that enables the ride height of the trailer deck to be adjusted. Most commonly, the device will be used to match the ride height of the trailer deck to the height of a loading bay, to enable easy loading/unloading of the trailer.

It is an object of the present invention to seek to provide an improved device of this nature.

Accordingly, one aspect of the present invention provides a control system for a trailer, the trailer comprising a trailer deck and a suspension system which is controllable to adjust the height of the trailer deck above the surface on which the trailer rests, the control system comprising: a processor which is operable to control the suspension system; and a determining arrangement to determine automatically the height of a surface of a loading bay in proximity to the trailer, either relative to the surface on which the trailer rests or relative to a part of the trailer, wherein the processor is operable to adjust the height of the trailer deck, in response to information from the determining arrangement, to match substantially that of the surface of the loading bay.

Advantageously, the control system further comprises a camera, the determining arrangement being connected to receive the signals from the camera and to determine, from the signals, the height of the surface of the loading bay.

Preferably, the camera is mounted on the trailer.

Conveniently, the camera is mounted on the trailer at a position that is level, or approximately level, with that of the trailer deck.

Advantageously, the camera is positioned so that, if the trailer is reversed towards the surface of a loading bay, at least a region of the surface of the loading bay is within the field view of the camera.

Preferably, the control system further comprises a lamp to illuminate at least a portion of the field of view of the camera.

Conveniently, the control system further comprises a communication arrangement operable to transmit the height determined by the determining arrangement to a remote control centre.

Advantageously, the control system further comprises a positioning system, wherein the height is transmitted to the remote control centre in combination with information from the positioning system indicating the location of the loading bay.

Preferably, the control system further comprises: a positioning system to determine the location of the trailer; and a memory storing the heights of the surfaces of one or more loading bays in conjunction with the locations of the loading bays.

Conveniently, the processor is operable to determine a loading bay, of those stored in the memory, which is closest in location to that of the trailer, and to adjust the height of the trailer deck to match or substantially match that of the surface of the selected loading bay.

Advantageously, the automatic adjustment of the height of the trailer deck by the processor may be selectively activated.

Another aspect of the present invention provides a trailer incorporating a control system according to any of the above.

Preferably, the trailer further comprises a manual system to allow manual adjustment of the height of the trailer deck.

A further aspect of the present invention provides a method of controlling the height of a trailer deck of a trailer comprising a suspension system which is controllable to adjust the height of the trailer deck above the surface on which the trailer rests, the method comprising the steps of: determining automatically the height of a surface of a loading bay in proximity to the trailer, either relative to the surface on which the trailer rests or relative to a part of the trailer; transmitting the determined height to a processor associated with the trailer; and controlling, by the processor, the suspension system to adjust the height of the trailer deck, in response to the information from the determining arrangement, to match substantially that of the surface of the loading bay.

Another aspect of the present invention provides a computer program comprising computer program code adapted to perform all of the steps of the above when run on a computer.

A further aspect of the present invention provides a computer program according to the above embodied on a computer-readable medium.

In order that the present invention may be more readily understood embodiments thereof will now be described, by way of example, with reference to the accompany drawing, which shows a schematic view of a part of a trailer embodying the present invention.

Referring to the figure, a schematic view is shown of the rear of a trailer 1. The trailer 1 includes a main cargo region 2 (which will typically be substantially enclosed), the floor of which is the trailer deck 3.

The rear of the trailer 1 has a plurality of wheels 4 (in the depicted embodiment, two sets of wheels 4), each of which is attached to the chassis by way of an air suspension system (not visible in the figure) which includes air bellows. Typically each axle 4 will have at least two associated air bellows.

As will be understood by those skilled in the art, in use of the air suspension system pressurised air is introduced into the bellows to lift the chassis/body of the trailer 1 upwardly with respect to the trailer's wheels 4/axles. Air suspension systems are generally self-levelling and are regarded as providing a smooth ride.

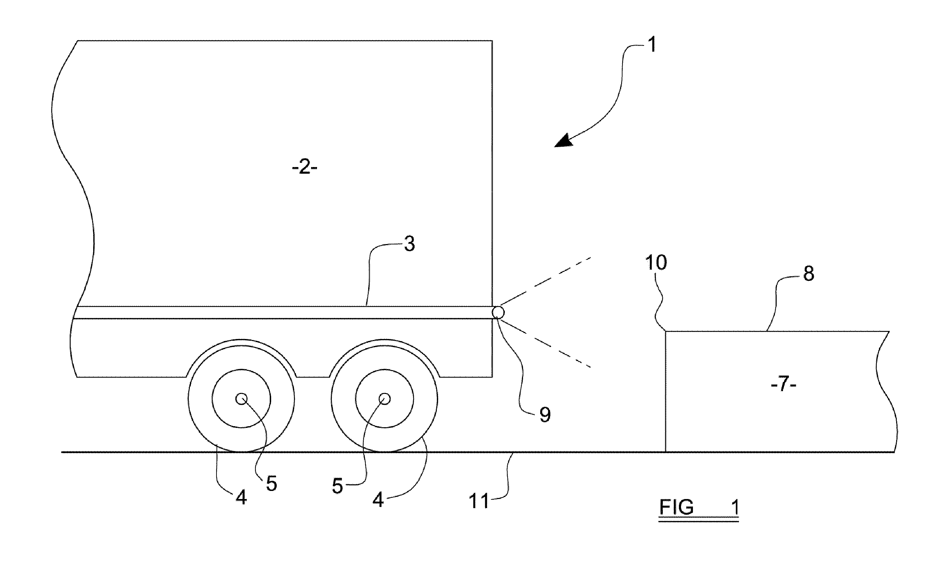

In figure 1 the rear end of the trailer 1 is in proximity to a loading bay 7. The loading bay 7 includes a loading surface 8. It will be understood that, in order to assist the ease of loading and unloading, it is desirable for the height of the trailer deck 3 to be adjusted to match closely that of the loading surface 8.

It is known for trailers to have a manual height adjustment system, to allow an operator to adjust the ride height of the trailer deck. For instance, a trailer may be provided with a levelling valve/ride height valve, allowing the amount of compressed air in the bellows of the air suspension system to be controlled, thus raising or lowering the height of the trailer deck. It is also known for trailers to have a fully electro-pneumatic suspension, provided with a height sensor.

In the arrangement shown in figure 1, the trailer 1 is provided with a camera 9. Preferably, the camera 9 is located on a rear surface of the trailer 1, and more preferably is approximately level with the height of the trailer deck 3. The camera 9 has a field of view which points generally rearwardly with respect to the trailer 1 so that, as the trailer 1 is reversed towards the loading bay 7, a front edge 10 of the loading surface 8 is likely to be within the field of view.

The camera 9 provides an output to an electronic control unit (ECU) of the trailer 1, or of a towing tractor (not shown), or to another processor which may be on board the trailer 1 or located remotely therefrom.

Signals from the camera 9 are analysed to determine the height of the loading surface 8, or at least the front edge 10 thereof, relative to a surface 11 on which the trailer 1 rests, or relative to the trailer deck 3 itself.

For instance, the camera 9 may be an optical video camera, and images captured by the camera 9 may be analysed to determine an edge that is likely to comprise the front edge 10 of the loading surface 8. The skilled person will appreciate how images captured by the camera 9 may be analysed to determine the location of this edge.

In response to the processing of images captured by the camera 9, the ride height of the trailer deck 3 may be adjusted automatically, for example by controlling the amount of air that is introduced into the bellows of the suspension system 5. For instance, if the ride height of the trailer deck 3 is initially higher than that of the front edge 10 of the loading surface 8 (as is shown in figure 1), the amount of air in the bellows may be reduced, so that the chassis of the trailer 1 moves downwardly with respect to the wheels 4, thus lowering the ride height of the trailer deck 3.

In an embodiment, the camera 9 may be positioned so that a particular vertical position on images captured by the camera 9 (for instance, a level aligned with the centre of images captured by the camera 9) corresponds to the height of the trailer deck 3. If, therefore, in images captured by the camera 9, the front edge 10 of the loading surface 8 is below the centre of the frame, this indicates that the ride height of the trailer deck 3 is higher than that of the front edge 10, and therefore that the trailer deck 3 needs to be lowered. Conversely, if the front edge 10 of the loading surface 8 appears at a level higher than the centre of the images, this indicates that the ride height of the trailer deck 3 is less than the height of the front edge 10, and therefore that the trailer deck 3 needs to be raised.

There are many other ways in which the camera 9 may be arranged, and the images derived therefrom processed, in order to provide the feedback necessary to align the ride height of the trailer deck 3 with that of the loading surface 8.

The camera 9 may be an infra-red (IR) camera, or indeed may operate in any other part of the electro-magnetic spectrum. In embodiments of the invention a lamp may be provided, operating in a suitable wavelength or range of wavelengths, to illuminate objects in the field of view of the camera 9. This will therefore allow the front edge 10 of a loading surface 8 to be illuminated as the trailer 1 approaches the loading surface 8, so that the front edge 10 may be more readily identified in images captured by the camera 9. The lamp may be provided in proximity to, or as part of, the camera 9, and may be oriented so that its field of illumination is generally aligned with the field of view of the camera 9.

In further embodiments, the camera 9 may comprise a radar or lidar camera, or another type of camera based on reflected radiation that provides information on the distance to objects within its field of view. It will be understood how data received from a radar camera may indicate an object that is relatively close (i.e. the front edge 10 of the loading surface 8) in a lower region of an image, with no close object detected in an upper region of the image. The location of the cut-off between these two regions of the image will indicate the height of the front edge 10 of the loading surface 8.

In embodiments of the invention an optical or IR camera may be combined with a radar/lidar camera.

In preferred embodiments the operator of the trailer 1 may actively select an "automatic ride height adjustment" mode, to activate the adjustment system described above. At other times, the ride height of the trailer deck 3 will not be automatically adjusted.

The trailer 1 may also be provided with a conventional manual ride height adjustment system. This may be used by an operator who is unfamiliar with the automatic adjustment system or where, for any reason, the automatic ride height adjustment system is not able to adjust the ride height of the trailer deck 3 to match that of a particular loading bay.

In an alternative embodiment of the invention, an ECU of the trailer 1 (or another processor connected with the trailer 1) may include or have access to a memory in which the heights of loading bays at various locations are stored. The trailer 1 is also provided with a positioning system, such as a GPS system. Information from the positioning system may be combined with the stored information so that, based on the location of the trailer 1, the height of the nearest loading bay can be retrieved. The ride height of the trailer deck 3 may then be automatically adjusted to match that of the nearest loading bay.

In these embodiments it is preferable for the trailer's height adjustment system to be operable to adjust the height of the trailer deck 3 to be a known distance from the surface on which the trailer 1 rests. In contrast, in the embodiments above in which the ride height is adjustable in response to signals from the camera 9, it is envisaged that the height adjustment system need not take account of the absolute height of the trailer deck 3 above the surface on which the trailer 1 rests. Rather, the height adjustment system simply needs to be able to make adjustments relative to an external reference point (such as the front edge 10 of the loading surface 8).

In these embodiments the trailer may have a distance measuring device to measure directly the height of the trailer deck 3 above the surface on which the trailer 1 rests. For instance, a laser may be directed downwardly towards the surface, and the reflected beam sensed. The distance to the surface may then be calculated, in a manner similar to that employed, for example, by laser tape measures.

Once again, the automatic height adjustment may occur only when an operator of the trailer 1 engages an "automatic ride height adjustment" mode.

It is envisaged that the information relating to the height of loading bays may be updated continuously or at intervals from a control centre, for instance via a telematic system of the trailer.

It is also envisaged that features of the above embodiments may be combined so that the ride height of the trailer deck 3 is adjusted automatically, using image data gathered by the camera 9, so that the ride height substantially matches the height of a particular loading bay. Once this automatic height-matching operation has been completed, the trailer ECU stores the height, in combination with position data taken from the trailer's positioning system. This information can be stored so that, when the trailer 1 is again in proximity to the same loading bay, the ride height of the trailer deck 3 can be automatically adjusted to the same height, without the need to analyse image data from the camera 9.

The data may also be transmitted from the trailer 1 to a remote control centre, where information can be stored and/or re-transmitted to other trailers. The appropriate ride height for a particular loading bay can therefore be added to a general list or database of loading bay heights.

It will therefore be understood that the trailer 1 may, when approaching a new loading bay, consult information stored by the trailer or at a remote control centre to determine whether or not the height of the loading bay is already stored for retrieval. If so, the height of the trailer deck 3 is automatically adjusted to match that of the loading bay. If this information is not available, however, the automatic height-adjustment method described above may be used, and the determined height may optionally be added to the list of stored loading bay heights.

It will be understood that embodiments of the invention provide a practical system which will save time and effort when preparing a trailer for loading/unloading.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A control system for a trailer, the trailer comprising a trailer deck and a suspension system which is controllable to adjust the height of the trailer deck above the surface on which the trailer rests, the control system comprising:
a processor which is operable to control the suspension system; and
a determining arrangement to determine automatically the height of a surface of a loading bay in proximity to the trailer, either relative to the surface on which the trailer rests or relative to a part of the trailer,
wherein the processor is operable to adjust the height of the trailer deck, in response to information from the determining arrangement, to match substantially that of the surface of the loading bay.

2. A control system according to claim 1 further comprising a camera, the determining arrangement being connected to receive the signals from the camera and to determine, from the signals, the height of the surface of the loading bay.

3. A control system according to claim 2 wherein the camera is mounted on the trailer at a position that is level, or approximately level, with that of the trailer deck.

4. A control system according to claim 2 or 3 wherein the camera is positioned so that, if the trailer is reversed towards the surface of a loading bay, at least a region of the surface of the loading bay is within the field view of the camera.

5. A control system according to any one of claims 2 to 4 further comprising a lamp to illuminate at least a portion of the field of view of the camera.

6. A control system according to any preceding claim further comprising a communication arrangement operable to transmit the height determined by the determining arrangement to a remote control centre.

7. A control system according to claim 6, further comprising a positioning system, wherein the height is transmitted to the remote control centre in combination with information from the positioning system indicating the location of the loading bay.

8. A control system according to any preceding claim further comprising:
a positioning system to determine the location of the trailer; and
a memory storing the heights of the surfaces of one or more loading bays in conjunction with the locations of the loading bays.

9. A control system according to claim 8 wherein the processor is operable to determine a loading bay, of those stored in the memory, which is closest in location to that of the trailer, and to adjust the height of the trailer deck to match or substantially match that of the surface of the selected loading bay.

10. A control system according to any preceding claim wherein the automatic adjustment of the height of the trailer deck by the processor may be selectively activated.

11. A trailer incorporating a control system according to any preceding claim.

12. A trailer according to claim 9, further comprising a manual system to allow manual adjustment of the height of the trailer deck.

13. A method of controlling the height of a trailer deck of a trailer comprising a suspension system which is controllable to adjust the height of the trailer deck above the surface on which the trailer rests, the method comprising the steps of:
determining automatically the height of a surface of a loading bay in proximity to the trailer, either relative to the surface on which the trailer rests or relative to a part of the trailer;
transmitting the determined height to a processor associated with the trailer; and
controlling, by the processor, the suspension system to adjust the height of the trailer deck, in response to the information from the determining arrangement, to match substantially that of the surface of the loading bay.

14. A computer program comprising computer program code adapted to perform all of the steps of claim 13 when run on a computer.

15. A computer program according to claim 14 embodied on a computer-readable medium.
